# EUROPEAN PATENT APPLICATION

(11) **EP 1 964 728 A2**
(43) Date of publication of application: **03.09.2008**
(21) Application number: 08151092.7
(22) Date of filing: 06.02.2008
(51) Int. Cl.: B60R 21/21, B60R 21/231

(54) **Curtain airbag module**

(30) Priority: 27.02.2007 JP 2007046620
(71) Applicant: TAKATA CORPORATION, Minato-ku, Tokyo 106-8510 (JP)
(72) Inventor: Sakai, Katsuyuki, Tokyo Tokyo 106-8510 (JP); Nakazawa, Wataru, Tokyo Tokyo 106-8510 (JP)
(74) Representative: Vossius & Partner

(57) **Abstract**

An airbag module is provided that can minimize damage behavior to achieve compliance with a BAM test. An airbag module MJ1 includes brackets 40 provided on airbag mounting segments 23 of an airbag 20, a bracket 42 provided on an inflator 10, a chain member CH that links these brackets 40 and 42 to one another, and ring members R that link the mounting segments 23 to the brackets 40. Accordingly, separation between the inflator 10 and the airbag 20 can be minimized in the event of auto-ignition of the inflator 10 in response to ignition of a burner. (Fig. 3)

## Description

The present invention relates to a curtain airbag module used in a curtain airbag apparatus equipped with a curtain airbag that is deployed downward along an inner side surface of a vehicle cabin when a vehicle is involved in a collision in order to ensure safety of the head and shoulders of an occupant.

As vehicle airbag apparatuses for ensuring safety of drivers and passengers, curtain airbag apparatuses have been used. Specifically, a curtain airbag apparatus is equipped with a folded curtain airbag that is inflated when the vehicle is involved in a collision. The inflated curtain airbag is deployed downward in the form of a curtain along an inner side surface of the vehicle cabin so as to restrain the heads and shoulders of occupants.

In such a curtain airbag apparatus, the curtain airbag is folded and covered with a breakable cover member. Moreover, a plurality of mounting segments provided on the upper side of the curtain airbag and projecting from the cover member are temporarily secured to a plurality of mounting sections by means of brackets that hold the mounting segments, the mounting sections being provided along an edge inside the vehicle cabin where the ceiling and a sidewall thereof meet. The mounting segments are then fixed to the mounting sections with, for example, bolts so that the curtain airbag is attached to the vehicle body. Furthermore, an inflator is mounted on the aforementioned edge and is connected to one longitudinal end of the curtain airbag (for example, see JP-A-2002-187518 (Patent Document 1)).

Generally, a curtain airbag apparatus like the one described above is shipped in a state where it is not attached to a vehicle body. In other words, a curtain airbag apparatus is generally shipped as a curtain airbag module in which a retaining member that retains an airbag in a folded state having a plurality of mounting segments on the upper side thereof and an inflator for inflating the airbag by supplying pressure fluid thereto are linked to each other.

In recent years in Germany, airbag apparatuses need to comply with a BAM test in view of ensuring safety during shipping. This test is implemented to determine whether damage behavior is kept within a certain limit range when the inflator is auto-ignited in response to ignition of a burner. Some important criteria in the test include a criterion for determining whether separation between the inflator and the airbag is properly minimized and a criterion for determining whether detachment of the brackets from the mounting segments of the airbag is properly minimized. Therefore, it has become urgently necessary to find countermeasures to satisfy these criteria.

A first object of the present invention is to provide a curtain airbag module that can minimize damage behavior to achieve compliance with a BAM test.

A second object of the present invention is to provide a curtain airbag module that can minimize separation between an inflator and an airbag to achieve compliance with a BAM test.

A third object of the present invention is to provide a curtain airbag module that can minimize detachment of brackets from mounting segments of an airbag to achieve compliance with a BAM test.

In order to achieve the first and second objects, a first aspect of the invention provides a curtain airbag module that links a retaining member and an inflator together, the retaining member retaining an airbag in a folded state, the airbag having a plurality of mounting segments at an upper side thereof, the inflator supplying pressure fluid to the airbag to inflate the airbag. The curtain airbag module is characterized by including a first link member that links airbag brackets provided on the mounting segments of the airbag to an inflator bracket provided on the inflator.

According to the first aspect, since the airbag brackets provided on the mounting segments of the airbag and the inflator bracket provided on the inflator are linked to each other by means of the first link member, separation between the inflator and the airbag can be minimized in the event of auto-ignition of the inflator in response to ignition of a burner, thereby achieving compliance to a BAM test.

A second aspect is characterized in that, in the first aspect, the first link member links at least two of the airbag brackets to each other.

According to the second aspect, at least two of the airbag brackets being linked to each other by means of the first link member further minimizes the separation between the inflator and the airbag when the inflator is auto-ignited.

A third aspect of the invention is characterized in that, in the first or second aspect, the first link member is a chain member.

According to the third aspect, since a chain member is used as the first link member that links the inflator bracket to the airbag brackets, the plurality of airbag brackets arranged in the longitudinal direction can be linked to each other, thereby further minimizing the separation between the inflator and the airbag.

In order to achieve the first and third objects, a fourth aspect of the invention as defined in claim 5 provides a curtain airbag module that links a retaining member and an inflator together, the retaining member retaining an airbag in a folded state, the airbag having a plurality of mounting segments at an upper side thereof, the inflator supplying pressure fluid to the airbag to inflate the airbag. The curtain airbag module is characterized by including second link members that link airbag brackets provided on the mounting segments of the airbag to the mounting segments.

According to the fourth aspect, since the airbag brackets provided on the mounting segments of the airbag and the mounting segments are linked to each other by means of the second link members, detachment of the airbag brackets from the mounting segments of the airbag can be minimized when the inflator is auto-ignited in response to ignition of a burner, thereby achieving compliance to a BAM test.

A fifth aspect of the invention is characterized in that, in the fourth aspect, the second link members are ring members.

According to the fifth aspect, since ring members are used as the second link members, a secure connection can be achieved between the airbag brackets and the mounting segments, whereby sufficient strength can be attained at low cost.

A sixth aspect of the invention is characterized in that, in the fourth or fifth aspect, a chain member that links at least two of the second link members to each other is further provided.

According to the sixth aspect, since at least two of the second link members that link the airbag brackets provided on the mounting segments of the airbag to the mounting segments are linked to each other by means of the chain member, the plurality of airbag brackets arranged in the longitudinal direction can be linked to each other, thereby further minimizing the detachment of the airbag brackets.

According to the present invention, damage behavior is kept within a certain limit range when an inflator is auto-ignited in response to ignition of a burner, thereby achieving compliance with a BAM test.

An embodiment of the present invention will now be described with reference to the drawings.
Fig. 1 illustrates a state where a curtain airbag apparatus according to an embodiment of the present invention is attached to a vehicle;
Fig. 2 is a partial perspective view of a curtain airbag body of the curtain airbag apparatus according to the embodiment;
Fig. 3 is a side view showing an entire curtain airbag module that connects a retaining member and an inflator together;
Fig. 4 is a perspective view showing a relationship between a mounting segment of a curtain airbag and a bracket, and includes part (a) showing a state where the bracket is being overlaid on the vehicle-body side of the mounting segment and part (b) showing a state where the bracket is overlaid on the mounting segment such that through holes thereof are aligned with each other;
Fig. 5 includes part (a) showing a state where a notched-end tube is being inserted into the aligned through holes of the bracket and the mounting segment that are overlaid on each other, and part (b) showing a state where the notched-end tube extends through the through holes of the mounting segment and the bracket;
Fig. 6 is a cross-sectional view showing a state where a ring member is engaged with the temporarily joined notched-end tube in an inseparable fashion, and also showing a state where a chain member is engaged and linked to this ring member;
Fig. 7 is a cross-sectional view showing a structure for mounting the curtain airbag onto mounting sections of the vehicle body; and
Fig. 8 is an overall side view of a modified example of a curtain airbag module in which an inflator is provided at a midsection of the curtain airbag module in the longitudinal direction.

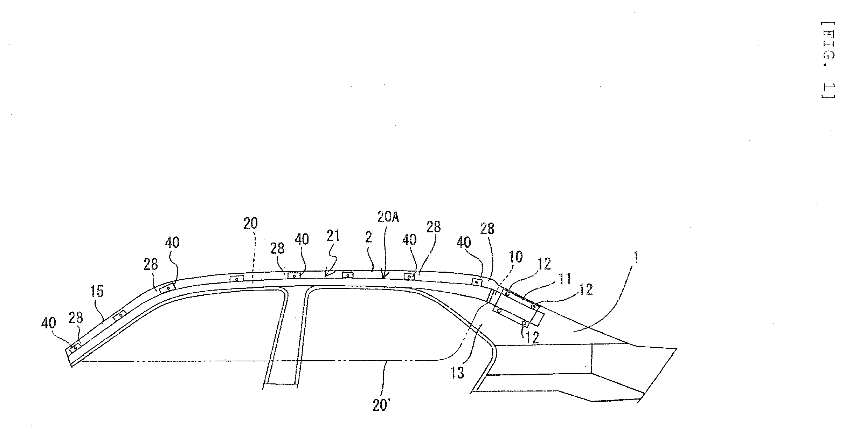

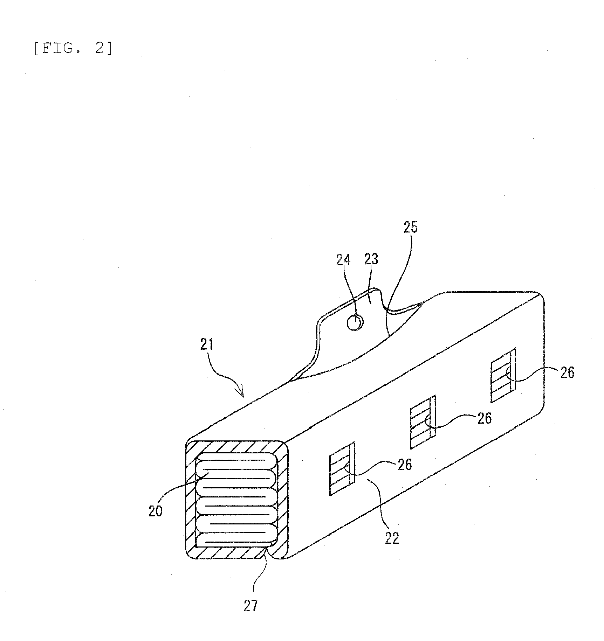

Fig. 1 illustrates a state where a curtain airbag apparatus according to an embodiment of the present invention is attached to a vehicle. In Fig. 1, the left side of the drawing is the front of a vehicle body 1 and the right side is the rear thereof. Fig. 2 is a partial perspective view of a curtain airbag body of the curtain airbag apparatus according to the embodiment.

Referring to Figs. 1 and 2, a curtain airbag apparatus 20A is provided along an edge inside the vehicle body 1 where the ceiling and a sidewall thereof meet.

The curtain airbag apparatus 20A includes a curtain airbag body 21 having a folded curtain airbag 20 (see also Fig. 2) that is covered and retained by a breakable cover member (retaining member) 22, an inflator 10 that supplies gas to the airbag 20 from a rear side of the airbag body 21, and a sensor (not shown) that detects a collision and sends an ignition signal to the inflator 10. When the vehicle is involved in a side collision or rollover, the sensor detects the condition, and an inflator control circuit (not shown) sends an activation signal to an initiator (not shown) for the inflator 10. This activates the initiator and thus actuates the inflator 10, causing the inflator 10 to discharge gas for inflating the curtain airbag 20. As a result, the curtain airbag 20 is deployed downward as shown with a dash-dot line 20' in Fig. 1, thereby restraining the head of an occupant.

Referring to Fig. 2, the curtain airbag 20 is folded in a zigzag fashion in the vertical direction such that the curtain airbag 20 in the folded state has a rectangular shape in cross section. Ear-like mounting segments 23 projecting from the upper side of the curtain airbag 20 protrude upward through narrow openings (slots) 25 provided at a vehicle-body side of an upper surface of the cover member 22.

The mounting segments 23 are arranged at multiple sections of the curtain airbag 20 in the longitudinal direction thereof. Each mounting segment 23 has a through hole 24 for a mounting bolt. A side surface of the cover member 22 proximate to the vehicle cabin has a plurality of vertically extending openings 26 that are arranged in the longitudinal direction. Through these openings 26, the folded state of the curtain airbag 20 can be checked visually from the outside of the cover member 22.

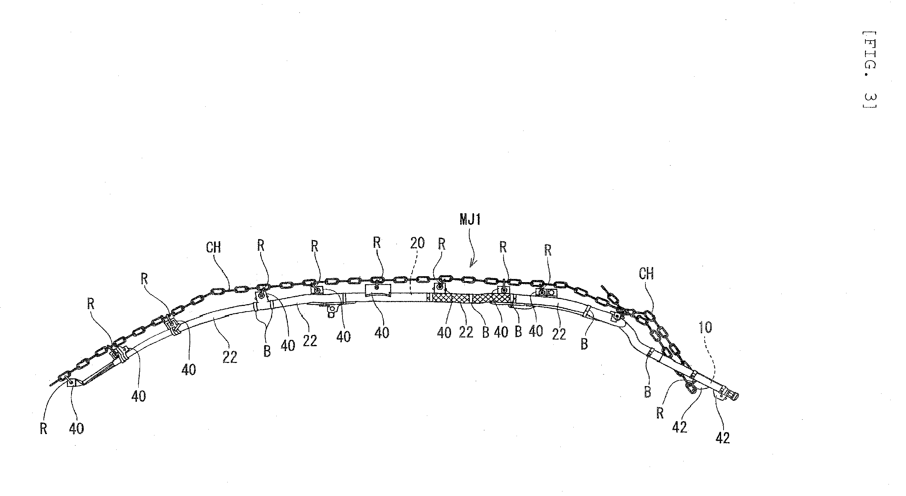

At an edge of the cover member 22 where the side surface thereof proximate to the vehicle cabin and the bottom surface thereof meet is provided a fragile section 27 that serves as a breaking point of the cover member 22 when the curtain airbag 20 inflates. The cover member 22 is retained by a plurality of breakable bands B (see Fig. 3) wound around the outer periphery thereof. The bands B are provided at predetermined intervals.

The curtain airbag 20 is bent in the shape of a bow in the longitudinal direction and is fixed along an edge inside the vehicle body 1 where the ceiling and a sidewall thereof meet. Specifically, the curtain airbag 20 is fixed to mounting sections 28 by means of brackets (i.e. airbag brackets) 40, the mounting sections 28 being provided in a bow-shaped area that extends along a roof side rail 2 from an A pillar (front pillar) 15. A C pillar (rear pillar) 13 at the rear of the vehicle body 1 is provided with the inflator 10. The inflator 10 is wrapped by a bracket (inflator bracket) 11, and the bracket 11 is mounted on the C pillar 13 with bolts 12, whereby the inflator 10 is attached to the C pillar 13.

Fig. 3 is a side view that shows a state where the curtain airbag apparatus 20A is not attached to the vehicle body 1, or in other words, shows an entire curtain airbag module that connects the retaining member 22 and the inflator 10 together. As in Fig. 1, the left side in Fig. 3 is the front of the vehicle body 1 and the right side is the rear thereof.

Referring to Fig. 3, a curtain airbag module MJ1 is a module in which a chain member CH (to be described in detail hereinafter) and ring members R (to be described in detail hereinafter) are attached to the curtain airbag apparatus 20A in its independent state where the apparatus 20A is not mountable to the vehicle body 1.

Specifically, the plurality of mounting segments 23 (see Fig. 2) and the brackets 40 are temporarily joined to each other with notched-end tubes 5 (to be described hereinafter). Each of the notched-end tubes 5 has one of the ring members R (second link members) engaged thereto. The inflator 10 is provided with a bracket 42 for attaching the inflator 10 to the C pillar 13 (see Fig. 1) at the rear of the vehicle body 1. The ring members R engaged with the brackets 40 are linked to a through hole (not shown) in the bracket 42 of the inflator 10 by means of the chain member CH (first link member).

The curtain airbag module MJ1 is configured such that damage behavior is kept within a certain limit range by the chain member CH and the ring members R in accordance with a BAM test (damage behavior test) prescribed in Germany. More specifically, this test is implemented in order to determine whether or not a criterion is met when the inflator 10 is auto-ignited in response to ignition of a test burner (not shown), the criterion including a criterion for determining whether separation between the inflator 10 and the curtain airbag 20 is properly minimized or a criterion for determining whether detachment of the brackets 40 from the mounting segments 23 of the curtain airbag 20 is properly minimized.

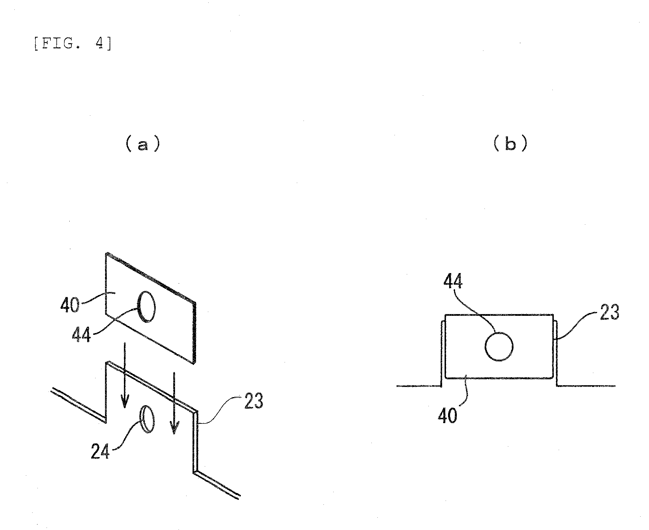

Fig. 4 is a perspective view showing a detailed joint structure between one of the mounting segments 23 of the curtain airbag 20 and the corresponding bracket 40 in the curtain airbag module MJ1. Specifically, Fig. 4 includes part (a) showing a state where the bracket 40 is being overlaid on the mounting segment 23 and part (b) showing a state where the bracket 40 is overlaid on the mounting segment 23 such that the through holes thereof are aligned with each other.

In Fig. 4(a) and Fig. 4(b), the bracket 40 in this example is formed of a flat rectangular metal plate that has a through hole 44 for a mounting bolt in substantially the center thereof. After the bracket 40 is overlaid on the mounting segment 23 of the curtain airbag 20 (see also Fig. 2), the positions of the bracket 40 and the mounting segment 23 are adjusted so that the through hole 44 is substantially aligned with the through hole 24 of the mounting segment 23 (i.e. the state shown in Fig. 4(b)).

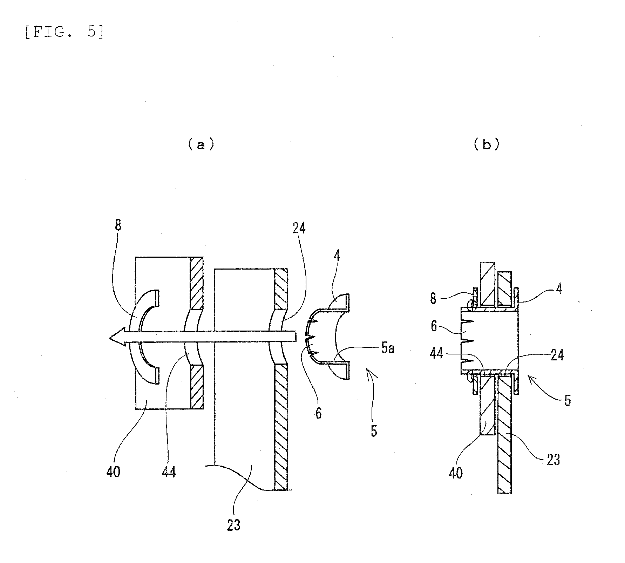

Fig. 5(a) illustrates a state where a notched-end tube (to be described hereinafter) is being inserted into the aligned through holes 24 and 44 of one of the mounting segments 23 and the corresponding bracket 40 that are overlaid on each other. Fig. 5(b) illustrates a state where the notched-end tube extends through the through holes 24 and 44 of the mounting segment 23 and the bracket 40.

In Fig. 5(a) and Fig. 5(b), each notched-end tube 5 formed by press-molding a soft metal plate into a tubular shape is provided so as to extend through the corresponding through holes 24 and 44. Along the rim of a front end of the notched-end tube 5 is provided a notched section 6 defined by a plurality of notches oriented in the axial direction of the notched-end tube 5. The notched-end tube 5 also has a large-diameter flange 4 at a rear end thereof.

As shown in Fig. 5(a), the front end of the notched-end tube 5 is first inserted into the substantially aligned through holes 24 and 44 from the vehicle cabin side until the large-diameter flange 4 abuts on the side surface of the mounting segment 23 proximate to the vehicle cabin. Then, the notched section 6 is aligned with the through hole 44 of the bracket 40 and is inserted through a washer 8 positioned on a side surface of the vehicle body. Subsequently, the notched section 6 is bent outward along the notches so that the notched section 6 is integrated with the washer 8 by caulking. As a result, the mounting segment 23 and the bracket 40 are temporarily joined to each other with the notched-end tube 5 extending through the aligned through holes 24 and 44 as shown in Fig. 5(b).

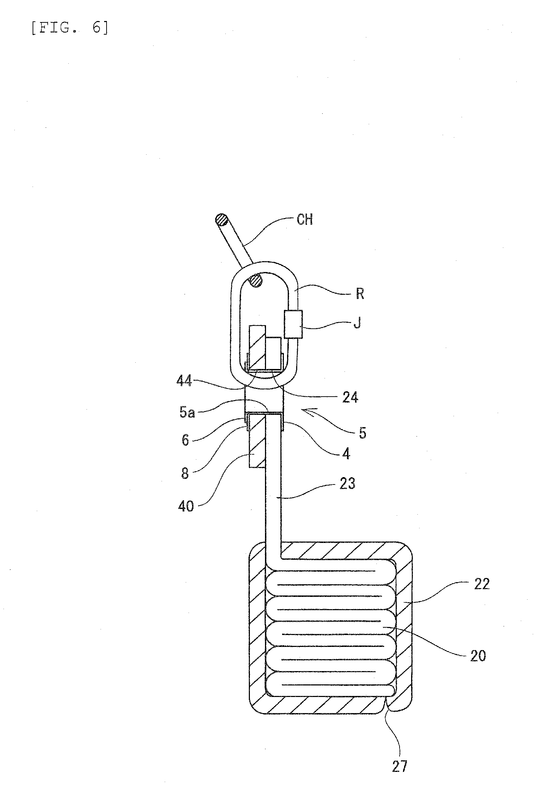

Fig. 6 is a cross-sectional view showing a state where one of the ring members R is engaged with the temporarily joined notched-end tube 5 in an inseparable fashion, and also showing a state where the chain member CH is engaged and linked to this ring member R.

In Fig. 6, regarding the mounting segment 23 and the bracket 40 temporarily joined to each other by means of the notched-end tube 5, the ring member R is inserted through a through hole 5a provided in the notched-end tube 5 at the central portion thereof in the radial direction so that the ring member R, the mounting segment 23, the bracket 40, and the notched-end tube 5 are linked to one another in an inseparable fashion. Each ring member R has a substantially oval shape with a through portion. The chain member CH, for example, can be engaged with the ring member R by separating the ends of the through portion from each other (by a predetermined distance) and then inserting the chain member CH therethrough. The ends of the through portion are screw-connectable/disconnectable by means of a joint J.

The ring members R are also linked to the bracket 42 for the inflator 10 through the chain member CH (see Fig. 3). The chain member CH coupled to the bracket 42 is connected to the plurality of brackets 40 for the curtain airbag 20 as shown in Fig. 3.

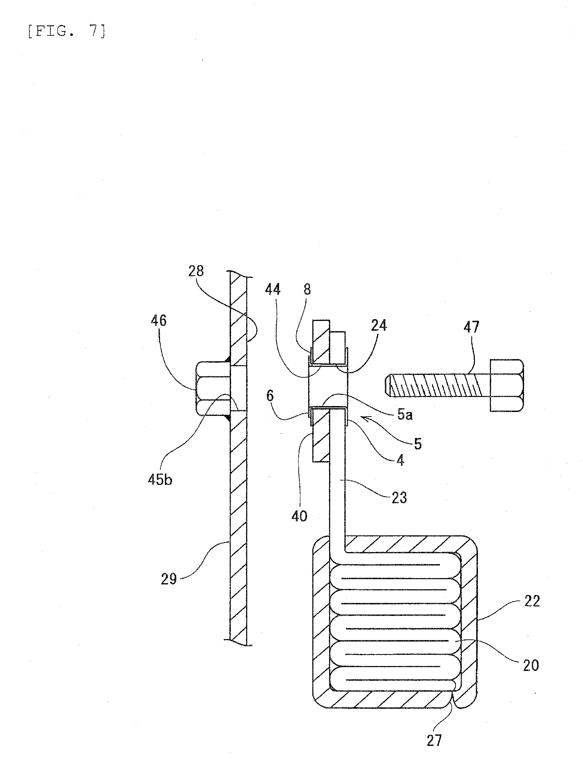

Fig. 7 is a cross-sectional view showing a structure for mounting the curtain airbag 20 onto the mounting sections 28 of the vehicle body 1 (in other words, a partially enlarged cross-sectional view of Fig. 1).

Fig. 7 shows an inner plate 29 of the vehicle body 1 onto which the mounting segments 23 of the curtain airbag 20 are mounted. The inner plate 29 has through holes 45 through which mounting bolts can be inserted. The rear face of the inner plate 29 has weld nuts 46 joined thereto around the respective through holes 45.

In a state where the mounting segments 23 of the curtain airbag 20 and the brackets 40 temporarily joined to each other by means of the notched-end tubes 5 are pressed against the mounting sections 28 of the inner plate 29, bolts 47 are inserted through the corresponding through holes 5a of the notched-end tubes 5 and corresponding holes 45b of the mounting sections 28 from the vehicle-cabin side of the mounting segments 23. The bolts 47 are then screwed and fastened to the weld nuts 46. Accordingly, the mounting segments 23 are fixed to the mounting sections 28 with the brackets 40 therebetween, whereby the curtain airbag 20 is attached to the vehicle body 1.

As described above, in the curtain airbag module MJ1 according to this embodiment, the brackets 40 for the mounting segments 23 are linked to the bracket 42 for the inflator 10 by means of the chain member CH (through the ring members R). Thus, when the inflator 10 is auto-ignited in response to ignition of a burner during a BAM test, separation of the inflator 10 from the curtain airbag 20 is minimized so that these components are prevented from being shattered as a result of explosive power, thereby achieving compliance with the BAM test.

In particular, the use of the chain member CH allows for a linkage among the brackets 40 arranged in multiple sections in the longitudinal direction, thereby further minimizing the separation between the inflator 10 and the curtain airbag 20. As an alternative, the chain member CH can be replaced with a wire.

In the curtain airbag module MJ1 according to this embodiment, the mounting segments 23 and the brackets 40 are linked to each other by means of the ring members R. Thus, when the inflator 10 is auto-ignited in response to ignition of a burner during a BAM test, separation of the brackets 40 from the mounting segments 23 is minimized so that these components are prevented from being shattered as a result of explosive power, thereby achieving compliance with the BAM test.

In particular, the use of the ring members R allows for a secure connection between the brackets 40 and the mounting segments 23, whereby sufficient strength can be attained at low cost.

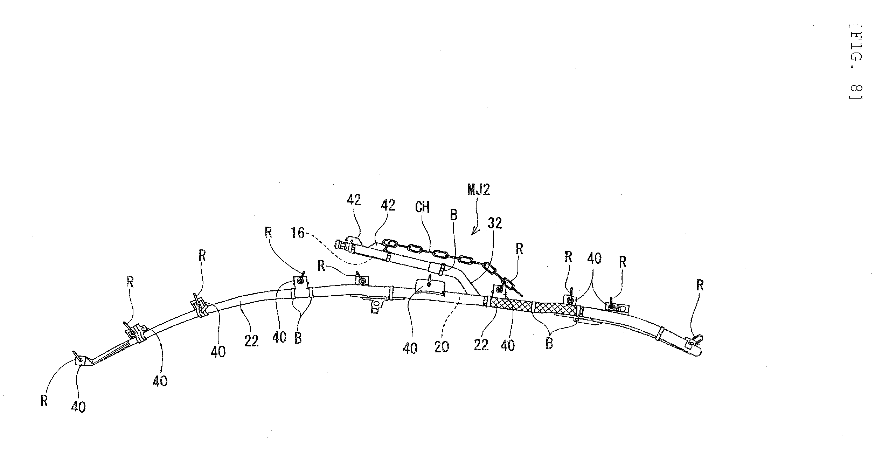

The present invention is not limited to the above-described embodiment, and other modifications are permissible. Fig. 8 is an overall side view of a modified example of a curtain airbag module in which an inflator is provided at a midsection of the curtain airbag module in the longitudinal direction. As in Fig. 1, the left side in Fig. 8 is the front of the vehicle body 1 and the right side is the rear thereof. Components shown that are the same as those in the above embodiment are given the same reference numerals, and descriptions of those components will not be repeated.

A curtain airbag module MJ2 according to this modified example shown in Fig. 8 is a module in a state where a curtain airbag apparatus provided with an inflator 16 at a midsection in the longitudinal direction is detached from the vehicle body 1. The inflator 16 located at the midsection in the longitudinal direction of the entire curtain airbag module MJ2 is connected to a midsection of the curtain airbag 20 in the longitudinal direction through a connection pipe 32. The connection pipe 32 is fastened to the inflator 16 by means of a breakable band B.

The inflator 16 is provided with a bracket 42 for attaching the inflator 16 to a B pillar (see Fig. 1) extending in a midsection of the vehicle body 1. The bracket 42 and the bracket 40 for at least one of the mounting segments 23 (one mounting segment 23 in this example) are linked to each other by means of a chain member CH. The fixing structure and the advantage thereof between the brackets 40 and the mounting segments 23 by means of the notched-end tubes 5 and ring members R are the same as those described above, and detailed descriptions thereof will not be repeated.

Similar to the above-described embodiment, in this modified example, the bracket 42 for the inflator 16 and the brackets 40 for the curtain airbag 20 are linked to one another by means of the chain member CH so that when the inflator 16 is auto-ignited, separation between the inflator 16 and the curtain airbag 20 can be minimized.

## Claims

1. A curtain airbag module that links a retaining member and an inflator together, the retaining member retaining an airbag in a folded state, the airbag having a plurality of mounting segments at an upper side thereof, the inflator supplying pressure fluid to the airbag to inflate the airbag, the curtain airbag module comprising:
a first link member that links airbag brackets provided on the mounting segments of the airbag to an inflator bracket provided on the inflator.

2. The curtain airbag module according to Claim 1, wherein the first link member links at least two of the airbag brackets to each other.

3. The curtain airbag module according to Claim 1 or 2, wherein the first link member comprises a chain member.

4. A curtain airbag module according to Claim 1, 2 or 3, comprising:
second link members that link airbag brackets provided on the mounting segments of the airbag to the mounting segments.

5. A curtain airbag module that links a retaining member and an inflator together, the retaining member retaining an airbag in a folded state, the airbag having a plurality of mounting segments at an upper side thereof, the inflator supplying pressure fluid to the airbag to inflate the airbag, the curtain airbag module comprising:
second link members that link airbag brackets provided on the mounting segments of the airbag to the mounting segments.

6. The curtain airbag module according to Claim 4 or 5, wherein the second link members comprise ring members.

7. The curtain airbag module according to one of Claim 4, 5 or 6 further comprising a chain member that links at least two of the second link members to each other.
